# FASCICULE DE BREVET EUROPEEN

(11) **EP 2 351 126 B1**
(45) Date de publication et mention de la délivrance du brevet: **11.09.2013**
(21) Numéro de dépôt: 09755977.7
(22) Date de dépôt: 07.10.2009
(51) Int. Cl.: H01M 4/36, H01M 4/62, H01M 4/485, H01M 4/505, H01M 4/525, H01M 4/58, H01M 4/13, H01M 4/131, H01M 4/139, H01M 4/1391, H01M 4/40, H01M 10/052

(54) **ELECTRODE COMPRENANT UN OXYDE COMPLEXE MODIFIE COMME MATIERE ACTIVE**
ELEKTRODE UMFASSEND EIN MODIFIZIERTES KOMPLEXOXID ALS AKTIVMATERIAL
ELECTRODE COMPRISING A MODIFIED COMPLEX OXIDE AS ACTIVE SUBSTANCE

(30) Priorité: 09.10.2008 FR 0805572
(43) Date de publication de la demande: 03.08.2011
(73) Titulaire: Batscap, 29500 Ergué-Gabéric (FR); Centre National de la Recherche Scientifique, 75016 Paris (FR)
(72) Inventeur: GAUBICHER, Joël, F-44000 Nantes (FR); GUYOMARD, Dominique, F-44880 Sautron (FR); DESCHAMPS, Marc, F-29000 Quimper (FR); LESTRIEZ, Bernard, F-31320 Vigoulet Auzil (FR); TANGUY, François, F-29120 Pont l'Abbe (FR)
(74) Mandataire: Goulard, Sophie
(86) Numéro de dépôt international: PCT/FR2009/051906
(87) Numéro de publication internationale: WO 2010/040950

(56) Documents cités:
- WO-A-03/049218
- WO-A-2006/120332
- GB-A- 2 197 529
- JP-A- 2003 045 433
- JP-A- 2006 139 945
- JP-A- 2008 016 235
- US-B1- 6 228 531

## Description

La présente invention se rapporte à une électrode pour batterie au lithium comprenant des particules d'un oxyde complexe modifiées en surface, à un procédé de fabrication de ladite électrode, ainsi qu'à une batterie au lithium comprenant ladite électrode.

Elle s'applique typiquement, mais non exclusivement, aux domaines des batteries lithium métal à électrolyte polymère sec ou gélifié, fonctionnant notamment à des températures de l'ordre de -20°C à 110°C, des batteries au lithium métal à électrolyte liquide, et des batteries à ions lithium à électrolyte polymère sec, liquide ou gélifié.

Divers oxydes complexes, tels que par exemple LiV₃O₈, LiFePO₄ ou LiMnO₂, sont couramment utilisés comme matière active d'une électrode. Un oxyde de ce type porte en général des groupes OH à sa surface, lorsqu'il est conservé dans des conditions normales, par exemple à l'air. On a constaté que, dans une batterie utilisant un tel oxyde complexe comme matière active d'une électrode, cet oxyde peut dans certains cas provoquer une dégradation de l'électrolyte de la batterie qui le contient, et ainsi en diminuer les performances. Cette dégradation a été attribuée à la présence des atomes d'oxygène des groupes -OH à la surface de ces oxydes complexes [Cf. notamment "The study of surface phenomena related to electrochemical lithium intercalation into LixMOy host material" D. Aurbach, et al., Journal of the Electrochemical Society, 147, (4) 1322-1331 (2000)].

Il a été proposé d'utiliser des matériaux d'enrobage afin de créer une barrière physique entre le matériau d'électrode et l'électrolyte pour protéger l'électrolyte et ainsi éviter la décomposition dudit électrolyte par le matériau d'électrode. Dans le cas où la conductivité n'est pas mixte, c'est-à-dire lorsque la conductivité est soit ionique soit électronique, l'épaisseur de l'enrobage doit être limitée et le contrôle de l'épaisseur conduit à des protocoles de synthèse onéreux et compliqués à mettre en oeuvre. Dans le cas où la conductivité est mixte, c'est-à-dire lorsque la conductivité est ionique et électronique, il est essentiel que la barrière physique soit continue. Cette barrière peut être du type inorganique ou organique. Une barrière inorganique nécessite une étape supplémentaire de traitement thermique tandis qu'une barrière organique est onéreuse et délicate à mettre en oeuvre.

JP 2006 139945 A divulgue un oxyde complexe de manganèse et de lithium de formule LiₓMnO₂ ou Li_{y}Mn₂O₄ (avec 0,9 ≤ x ≤ 1,1 et 0 < y < 2) sous forme de particules dont la surface est couverte par un composé organique ayant un groupement alkylphosphate ou un groupe chélatant, ainsi que son utilisation comme matériau d'électrode positive pour batterie secondaire au lithium.

JP 2003 045433 A décrit une batterie secondaire à électrolyte non-aqueux, comprenant une électrode négative, une électrode positive et un électrolyte, dans laquelle le matériau actif de l'électrode positive est un oxyde à la surface duquel des groupes acide phosphorique ou acide sulfonique comportant un substituant aromatique sont adsorbés sur un composant alcalin présent à la surface de l'oxyde.

JP 2008 016235 A divulgue un matériau actif d'électrode positive pour batterie secondaire à électrolyte non-aqueux, ledit matériau étant constitué de particules d'oxyde complexe (Li₁₋ₓCo_{1-y}M_{y}O_{2-z} avec M = Mg, Al ou B) recouvertes par une couche d'oxyde (contenant au moins Li, Ni ou Mn), elle-même recouverte au moins en partie par une couche comprenant des groupes phosphorés.

WO 2006/120332 A décrit un matériau d'électrode et une électrode composite comprenant ledit matériau, le matériau d'électrode étant composé de particules ou d'agrégats de particules d'oxyde complexe de lithium et d'au moins deux métaux de transition différents l'un de l'autre et dont la surface est recouverte au moins en partie par une couche de carbone fixée par des liaisons chimiques et/ou physiques ou par accrochage mécanique, dans laquelle le carbone comporte des groupements GF, en particulier des groupes ioniques tels que -PO₃M₂ ou -PO₂M, fixés par liaison covalente.

Le but de la présente invention est de pallier les inconvénients des techniques de l'art antérieur en proposant notamment une électrode pour une batterie au lithium, simple et économique à fabriquer, qui limite la dégradation de l'électrolyte en contact avec l'électrode et présente une cyclabilité améliorée.

La présente invention a pour objet une électrode, notamment pour batterie au lithium, comprenant un support conducteur électrique portant un matériau d'électrode, caractérisée en ce que le matériau d'électrode comprend une matière active constituée par des particules d'un oxyde complexe qui portent à leur surface des groupes organiques phosphorés fixés par liaison covalente et en ce que le taux de couverture des groupes organiques phosphorés à la surface des particules de l'oxyde complexe varie de 40 à 60% environ.

Par taux de couverture, on entend le rapport entre la concentration surfacique estimée et celle correspondant au maximum théorique pour une monocouche compacte.

Il a été constaté que, de manière surprenante, lorsque la matière active du type oxyde complexe est modifiée par greffage d'une monocouche de groupes organiques phosphorés, et que le taux de couverture des groupes organiques phosphorés à la surface des particules de l'oxyde complexe est de l'ordre de 40 à 60%, la dégradation de l'électrolyte est supprimée, ou tout au moins très fortement diminuée, malgré la discontinuité de la couche et malgré la présence des atomes d'oxygène. Ainsi, contrairement à ce qu'enseigne l'art antérieur, le remplacement de l'hydrogène dans les groupes -OH à la surface des particules de l'oxyde complexe par des groupes organiques phosphorés, avec un tel taux de couverture, présente une influence bénéfique sur la durée de vie de l'électrolyte.

Dans un mode de réalisation particulier, le taux de couverture des groupes organiques phosphorés à la surface des particules de l'oxyde complexe est de l'ordre de 50%.

Les groupes organiques phosphorés peuvent être :
- des groupes fixés par greffage tridentate [par exemple RP ou (RO)P] ;
- des groupes fixés par greffage bidentate [par exemple RP(OR), R₂P ou (RO)₂P] ;
- des groupes fixés par greffage monodentate [par exemple P(OR)₃, RP(OR)₂, et R₂P(OR)] ;
dans lesquels les groupements R sont des groupements identiques ou différents choisis parmi l'hydrogène, les groupes alkyle ayant de 1 à 10 atomes de carbone et les groupes phényle, lesdits groupes portant éventuellement au moins un substituant ayant une fonction capable de réagir par substitution, addition, condensation ou polymérisation.

On entend par oxyde complexe au sens de la présente invention, un oxyde de lithium et d'au moins un métal de transition. Les particules de l'oxyde complexe peuvent être choisies par exemple parmi les particules de LiV₃O₈, LiMn₂O₄, LiCoO₂, LiMPO₄ avec M = Fe, Mn ou Co, Li₂MSiO₄ avec M = Fe, Mn ou Co, LiFeBO₃, Li₄Ti₅O₁₂, LiMn₂O₄, LiNi_{1-y-z}Mn_{y}Co_{z}AlₜO₂ (0 < y < 1 ; 0 < z < 1 ; 0 < t < 1), V₂O₅, MnO₂, LiFePO₄F, Li₃V₂(PO₄)₃, et LiVPO₄F.

Dans ce qui suit,
- "oxyde complexe non modifié" désigne un oxyde complexe portant des groupes OH à sa surface, c'est-à-dire l'oxyde complexe tel qu'il se trouve dans des conditions de conservation normales, en présence d'air et/ou d'humidité ;
- "oxyde complexe modifié" désigne le matériau obtenu après traitement par un réactif phosphoré, c'est-à-dire un oxyde complexe portant à sa surface des groupes phosphorés tels que définis ci-dessus.

Le matériau d'électrode selon la présente invention peut en outre comprendre au moins un constituant choisi parmi un matériau conférant des propriétés de conduction ionique, un matériau conférant des propriétés de conduction électronique, et éventuellement un matériau conférant des propriétés mécaniques.

Le matériau conférant des propriétés de conduction ionique peut être un sel de lithium choisi notamment parmi LiClO₄, LiPF₆, LiAsF₆, LiBF₄, LiCF₃SO₃, LiSbF₆, LiFSI ou LiTFSI, les bisperfluoroalkyl sulfonimidures de lithium, et les bis- ou les trisperfluoro-sulfonylméthides de lithium.

Le matériau conférant des propriétés de conduction électronique peut être du carbone, de préférence choisi parmi les noirs de carbone tel que le composé Ensagri Super S^{®} commercialisé par la société Chemetals, les fibres de carbone telles que des VGCF (« Vapor Grown Carbon Fibers »), et des nanotubes de carbone, ou un de leurs mélanges.

Le matériau conférant des propriétés mécaniques est de préférence un liant organique, notamment un liant électrochimiquement stable jusqu'à un potentiel de 4,9 V vs Li⁺/Li⁰. Ce liant organique peut être un polymère non solvatant en mélange avec au moins un composé polaire aprotique, ou un polymère solvatant.

Dans un mode de réalisation préféré, le matériau d'électrode peut comprendre :
- de 50 à 90 % en poids de particules d'oxyde complexe modifié, de préférence 70 % en poids,
- de 10 à 30 % en poids de matériau conférant des propriétés de conduction électronique, de préférence 30 % en poids, et
- éventuellement, au plus 10 % en poids de matériau conférant des propriétés mécaniques.

Le support conducteur peut être un collecteur de courant qui est avantageusement en aluminium pour une électrode positive et en cuivre pour une électrode négative.

Un autre objet selon l'invention est un procédé de fabrication de l'électrode telle que décrite ci-dessus, caractérisé en ce qu'il comprend les étapes consistant à préparer un oxyde complexe modifié par réaction d'un oxyde complexe avec un réactif phosphoré portant un groupe P=O, et à déposer l'oxyde complexe modifié obtenu sur un support conducteur électrique.

L'épaisseur de ladite monocouche est très faible, plus particulièrement de l'ordre de 1 nm, et s'ajuste au maximum de la longueur du/des chaîne(s) moléculaire(s) du réactif phosphoré choisi. Ainsi, l'électrode selon l'invention ne présente pas de problèmes relatifs au transfert de charges, c'est-à-dire relatifs à l'énergie et/ou à la cinétique de l'injection des électrons et des ions dans la structure hôte.

Dans un mode de réalisation, le réactif phosphoré répond à la formule R₃₋ₙ(RO)ₙP=O dans laquelle n étant un nombre entier allant de 1 à 3 et les groupements R ont la signification donnée précédemment. On peut citer en particulier les composés répondant aux formules suivantes :

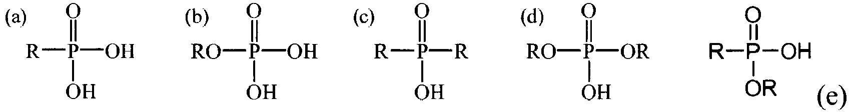

Le greffage résulte soit de la coordination entre l'atome d'oxygène d'un groupe P=O avec un atome de métal de l'oxyde complexe, soit de la condensation entre un groupe OH porté par un atome de métal de l'oxyde complexe et un groupe OH porté par le réactif phosphoré. Le schéma ci-dessous illustre un greffage monodentate (réaction A), un greffage bidentate (réaction B) et un greffage tridentate (réaction C). Lors de l'énumération d'exemples de groupes phosphorés greffés sur l'oxyde complexe faite précédemment, on considère que l'atome d'oxygène fait partie de l'oxyde complexe.

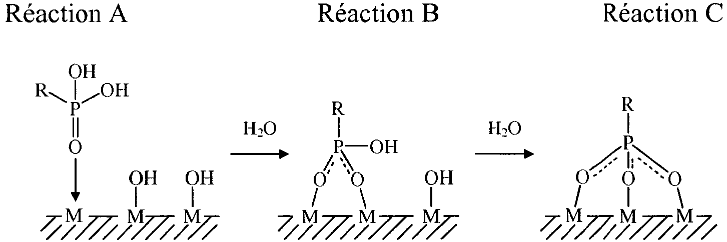

Lorsque le greffage est réalisé par l'intermédiaire de groupes OR dans lesquels R est différent d'un hydrogène, la molécule partante est ROH.

A titre d'exemple, on peut citer comme réactif phosphoré l'acide phénylphosphonique (PPO), le monophosphate de butyle et le monophosphate d'isopropyle.

La concentration en réactif phosphoré de la solution est choisie en fonction de la surface spécifique de l'oxyde complexe non modifié (mesurée par la méthode BET) et la surface approximée de la molécule phosphorée, déterminée par des considérations géométriques. La surface approximée d'un groupement phosphoré peut être estimée selon la méthode décrite dans G. Alberti, M. Casciola, U. Costantino and R. Vivani, Adv. Mater., 1996, 8, 291. Selon cette méthode, la surface libre (SL) entre chaque atome de P dans un phosphate de zirconium est de l'ordre de 24 Å². En conséquence tout groupement R qui est fixé sur l'atome P perpendiculairement à la surface et dont la surface de giration est inférieure 24 Å² ne doit pas, *a priori*, modifier la surface libre (SL). Or, dans le cas de l'acide phénylphosphonique (PPO), la surface géométrique basée sur les rayons de van der Waals des atomes C et H est de l'ordre de 18 Å². La surface approximée reste donc 24 Å².

Il est préférable que la quantité de réactif phosphoré par rapport à la quantité correspondant au greffage d'une monocouche soit de 1 à 5, et de préférence de 1 à 2.

Pour un rapport donné, le taux de couverture dépend de la durée pendant laquelle le réactif phosphoré est en contact avec l'oxyde complexe. Cette durée est généralement comprise entre 10 minutes et 5 jours. Après 10 minutes, on atteint environ 40 % de couverture, après 24h, de 50 % à 60 % environ et en 1 minute, on estime le taux de couverture à 20 % environ. L'étape de préparation de l'oxyde complexe modifié est de préférence effectuée pendant une durée de 24 heures environ.

Dans un mode de réalisation particulier, on prépare une solution de réactif phosphoré dans un solvant polaire ou non polaire dans lequel l'oxyde complexe est stable, par exemple l'eau ou l'isopropanol, on disperse des particules d'oxyde complexe non modifié dans ladite solution, et on laisse sous agitation, puis on sépare le solide du liquide, et enfin on rince le solide avec le solvant pur.

Un autre objet selon l'invention est une batterie au lithium comprenant une électrode positive et une électrode négative séparées par un électrolyte comprenant un sel de lithium en solution dans un solvant, dont le fonctionnement est assuré par la circulation réversible d'ions lithium entre lesdites électrodes, caractérisée en ce qu'au moins l'une des électrodes est une électrode telle que définie selon la présente invention. De préférence, l'électrode définie selon la présente invention est l'électrode positive.

Une batterie au lithium peut être une batterie dite "batterie au lithium métallique" dont l'électrode négative est constituée par du lithium métallique ou par un alliage de lithium choisi par exemple parmi les alliages β-LiAl, γ-LiAl, Li-Pb, Li-Cd-Pb, Li-Sn, Li-Sn-Cd, et Li-Sn, et l'électrode selon l'invention forme l'électrode positive. Une batterie au lithium peut être une batterie dite "rocking chair" ou "lithium ions" dont l'électrode positive est une électrode selon l'invention et l'électrode négative comprend un liant organique et un matériau capable d'insérer de manière réversible des ions lithium à bas potentiel rédox.

D'autres caractéristiques et avantages de la présente invention apparaîtront à la lumière des exemples qui vont suivre, lesdits exemples étant donnés à titre illustratif et nullement limitatif.
La figure 1 représente la quantité de réactif phosphoré par nm² d'oxyde complexe en fonction du temps de réaction entre le réactif phosphoré et les particules de l'oxyde complexe conformément à l'invention.
La figure 2 représente la courbe obtenue par spectroscopie à dispersion d'énergie (EDX) de particules d'un oxyde complexe modifiées en surface, selon l'invention.
La figure 3 représente les courbes obtenues par spectroscopie de photoélectrons X (XPS) des particules de la figure 2.
La figure 4 représente les spectres infrarouges de différents composés dont le spectre infrarouge des particules de la figure 2.
La figure 5 représente l'évolution de la cyclabilité en fonction de la capacité massique et de l'énergie massique pour une électrode conforme à l'art antérieur comparativement à une électrode conforme à l'invention.
La figure 6 représente l'évolution de la cyclabilité en fonction de la capacité massique et de l'énergie massique pour des électrodes fabriquées à partir de particules de LiV₃O₈ présentant différents taux de couvertures en groupements PP0 (0%,41 %, 47%, 51 %,61 % et 79 %) ;
La figure 7 annexée représente la cyclabilité des électrodes testées sur la figure 6 (exprimée en % de perte / cycle ; axe vertical de gauche, courbe avec les ronds vides) en fonction du taux de couverture (1/%), ainsi que la capacité des électrodes (exprimée en mAh/g ; axe vertical de droite, courbe avec les ronds pleins) en fonction également du taux de couverture (1/%).
La figure 8 représente les images obtenues par microscopie électronique à balayage (MEB) de la surface d'une électrode conforme à l'art antérieur (figure 8a) et conforme à l'invention (figure 8b).

### Exemple 1

### Préparation de particules d'un oxyde complexe modifiées en surface

On a utilisé un oxyde Li₁₊ₓV₃O₈ dans lequel 0,1 ≤ x ≤ 0,25, noté LiV₃O₈ dans la suite de la description.

0,75 g de particules de LiV₃O₈ dont la surface spécifique est de 38 m²/g ont été mis en suspension dans 20 mL d'une solution à 10 mmol.l⁻¹ d'acide phénylphosphonique (PPO) dans l'isopropanol.

La suspension ainsi formée a été agitée sur un banc d'agitation magnétique pendant 24 h puis récupérée, lavée avec le solvant et séchée. On a obtenu des particules d'oxyde complexe modifiées en surface, notées LiV₃O₈-PPO.

Les particules d'oxyde complexe modifiées en surface ont ensuite été lavées à l'isopropanol, soumises aux ultrasons pendant 5 min et centrifugées à 12000 tr/min pendant 10 minutes. Ce protocole a été répété trois fois. On a ainsi obtenu LiV₃O₈-PPO, avec un taux de couverture de l'ordre de 50%. Le lavage a permis de supprimer les espèces fixées par physisorption (pour lesquelles (ΔH < 20 kJ/mol), de sorte que tous les groupes phosphorés restants sont fixés par chimisorption (50 < ΔH < 800 kJ/mol).

Le taux de couverture est typiquement déterminé par le rapport de la surface BET de l'oxyde complexe modifié par la surface d'une molécule de PPO qui est d'environ 24A². En effet d'après les résultats des analyses élémentaires donnant les pourcentages massiques de P d'une part, et connaissant la surface spécifique de l'oxyde complexe non modifié et la surface d'une molécule d'autre part, il est facile de déterminer le nombre de molécules phosphorées par unité de surface. Le produit obtenu a été caractérisé par analyse élémentaire, par spectroscopie à dispersion d'énergie (EDX), par spectroscopie de photoélectrons X (XPS), par infrarouge (IR), et par diffraction des RX.

### Analyse élémentaire :

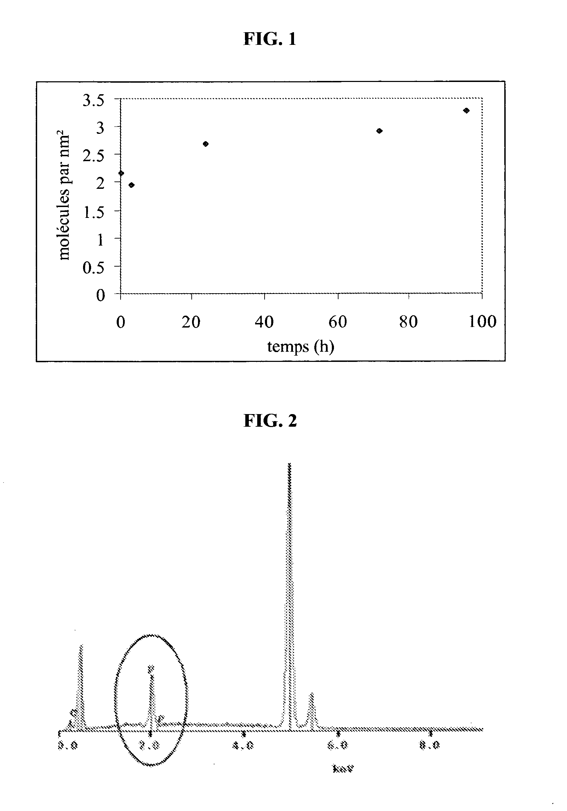

L'analyse élémentaire, effectuée sur le produit final obtenu après 24 h de réaction, ainsi que sur des produits intermédiaires, permet de déterminer le taux de couverture. L'évolution du taux de couverture en fonction du temps est représenté sur la figure 1, et il montre qu'après 10 minutes le taux de couverture est de 2,1 molécules / nm². La réaction est donc très rapide. L'accroissement du temps de réaction permet d'augmenter le taux de couverture jusqu'à 3,4 molécules / nm².

### DRX

Les résultats de l'analyse par diffraction des RX montrent que les particules de l'oxyde complexe modifiées en surface LiV₃O₈-PPO ne sont pas altérées par le processus de greffage. En effet aucune nouvelle phase n'est détectée et la métrique de l'oxyde complexe modifié est similaire à celle de l'oxyde complexe non modifié.

### EDX

La caractérisation par EDX a été effectuée à l'aide d'un microscope GEOL 6400. La Figure 2 concerne l'oxyde LiV₃O₈ greffé en surface avec PPO, obtenu après 24 heures de réaction. Elle montre la présence de phosphore à la surface des particules de l'oxyde complexe, dont la seule source possible est l'acide phénylphosphonique (PPO). Le pourcentage atomique du phosphore est de l'ordre de 1%.

### Analyses XPS

La caractérisation par XPS a été effectuée à l'aide d'un spectromètre de type Kratos Ultra Axis, sur le produit obtenu après 24 h de réaction.

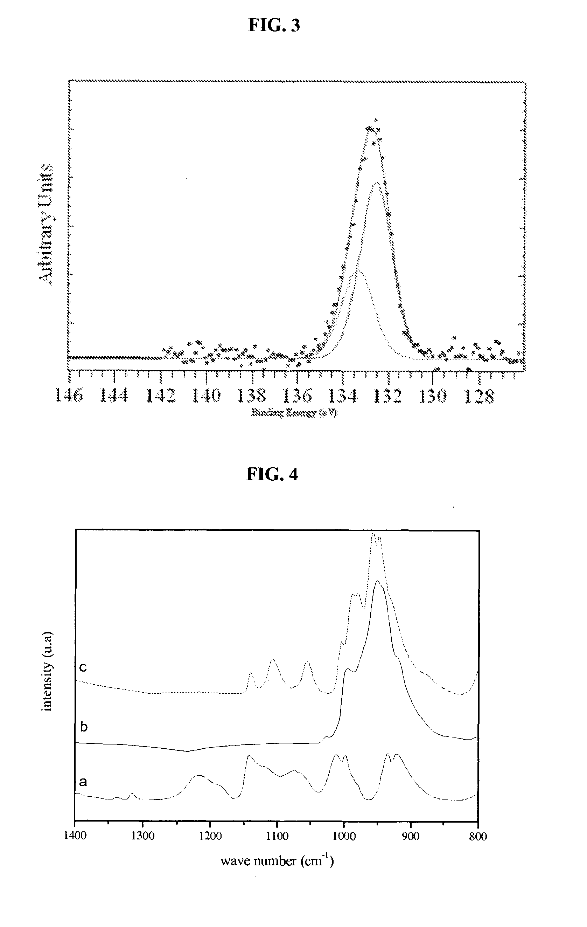

La figure 3 représente les spectres XPS des électrons de coeur du phosphore P 2p. On y voit la présence d'un doublet P 2p 3/2 - P 2p ½, situé à 132,6 - 133,4 eV. Ces énergies de liaisons sont caractéristiques d'un phosphore lié à plusieurs atomes d'oxygène et peuvent ainsi être attribuées à des groupements de type phosphonate présents en surface des particules de LiV₃O₈.

### Analyses IR

Les spectres infrarouges de l'acide phénylphosphonique (PPO) (a), de LiV₃O₈ (b) et de LiV₃O₈-PPO (c) sont représentés sur la figure 4. Les bandes de vibrations caractéristiques de l'acide phénylphosphonique (PPO) sont reportées dans le Tableau 1 ci-dessous.

**Tableau 1**

| | | |
|---|---|---|
| Vibrations du benzène monosubstitué | ν (=C-H) | 3056 cm⁻¹ à 3076 cm⁻¹ |
| | ν (C=C) | 1591 cm⁻¹ ou 1487 cm⁻¹ |
| | δ (=CH) | 752 cm⁻¹ ou 693 cm⁻¹, |
| Vibration de la liaison P-C | ν (P-C) | 1439 cm⁻¹ ou 1140 cm⁻¹ |
| Vibration P=O | ν (P=O) | 1250 cm⁻¹ à 1200 cm⁻¹ |
| Vibration P-OH | ν (P-O) | 1200 cm⁻¹ à 900 cm⁻¹ |
| | ν (O-H) | 2700 cm⁻¹ à 2560 cm⁻¹, 2300 cm⁻¹ à 2100 cm⁻¹ |

L'acide phénylphosphonique (PPO) présente des vibrations obtenues par Spectroscopie Infrarouge à Transformée de Fourier (ou FTIR pour *Fourier Transformed InfraRed spectroscopy*) qui sont caractéristiques des liaisons P-C, P=O et P-OH.

Sur la courbe c) correspondant à l'oxyde complexe modifié, la bande correspondant à la liaison P-C est visible à 1140 cm⁻¹ et celle de la liaison phosphoryle P=O, généralement visible à 1220 cm⁻¹, a disparu ce qui permet d'affirmer qu'il y a une forte interaction entre l'oxyde complexe LiV₃O₈ et l'acide phénylphosphonique (PPO). Les liaisons "P-O-oxyde complexe" sont caractérisées par les deux vibrations à 1107 cm⁻¹ et 1053 cm⁻¹.

Ces résultats confirment que les molécules de PPO sont greffées à la surface des particules de LiV₃O₈.

### Exemple 2

### Procédé de fabrication d'une électrode

On a utilisé des particules préparées selon le mode opératoire de l'exemple 1 comme matière active pour la fabrication d'une électrode.

Le matériau d'électrode a été préparé en mélangeant 30 % en poids de carbone et 70 % en poids des particules de l'oxyde complexe modifiées en surface LiV₃O₈-PPO obtenues selon le procédé de l'exemple 1.

Le matériau ainsi obtenu a ensuite été déposé sur une feuille d'aluminium destinée à former le collecteur de courant.

A titre comparatif, on a préparé une électrode selon le même procédé, en utilisant des particules de l'oxyde complexe LiV₃O₈ non modifiées.

Les propriétés électrochimiques des électrodes ainsi formées ont été vérifiées par des tests réalisés dans les conditions standards à température ambiante, dans une cellule Swagelok^{®} commercialisée par la société Swagelok, dans laquelle l'électrode à tester fonctionne comme électrode positive, l'électrolyte est une solution 1M de LiFP₆ dans un mélange carbonate d'éthylène (EC) / carbonate de diméthyle (DMC) 1/1, et l'électrode négative est une électrode de lithium métal.

La décharge et la charge ont été effectuées entre 3,7 V et 2 V vs. Li⁺/Li⁰ avec un courant 1 Li/2,5 h (correspondant à l'insertion d'une mole d'ions Li par mole de LiV₃O₈ en 2,5 heures) et 1 Li/5 h respectivement.

### Influence du greffage sur les propriétés électrochimiques

L'influence du greffage sur les propriétés électrochimiques d'une électrode positive a été mesurée à l'aide d'un galvanostat potentiostat de type Mac-Pile (Biologic SA, Claix, France).

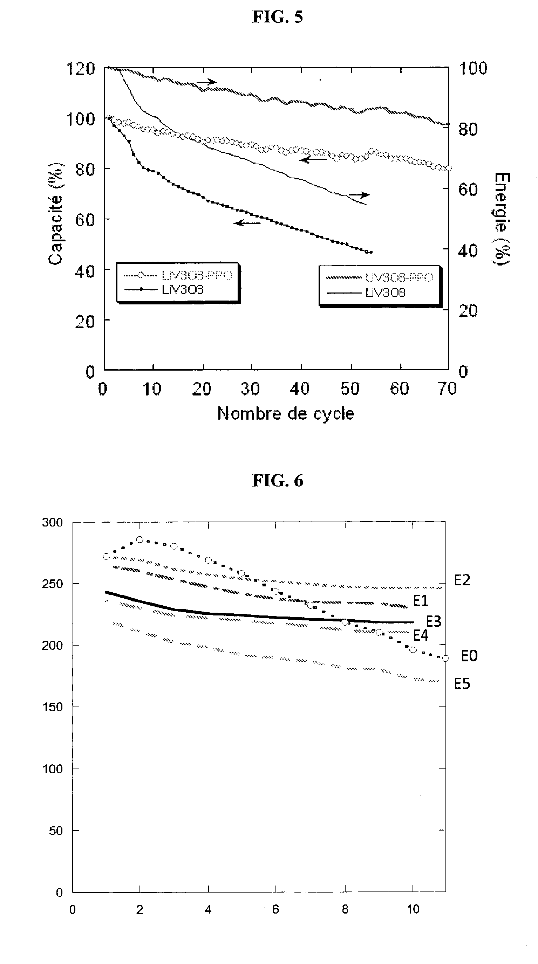

Sur la figure 5, les courbes d'énergie massique en fonction du nombre de cycles représentent la quantité d'énergie (produit de la capacité massique par le potentiel moyen de la batterie) par gramme d'oxyde complexe.

Les courbes de capacité massique en fonction du nombre de cycles représentent la quantité de charge stockée par gramme d'oxyde complexe.

La courbe de capacité en réduction correspondant à l'électrode selon l'invention décroît de façon bien moins importante après 70 cycles que la courbe de capacité en réduction correspondant à l'électrode contenant des particules de l'oxyde complexe LiV₃O₈ non modifiées après seulement 50 cycles. On peut également noter que l'électrode selon l'invention présente, quel que soit le nombre de cycles, une énergie supérieure à celle de l'électrode de référence. Ces résultats confirment que l'utilisation d'un oxyde complexe modifié selon la présente invention améliore la cyclabilité de l'électrode positive.

### Influence du taux de couverture sur les propriétés électrochimique

Des particules de LiV₃O₈ présentant des taux de couverture allant de 41 % à 79 %, ont été préparées selon le protocole détaillé ci-dessus à l'exemple 1, en faisant simplement varier le temps d'immersion des particules dans la solution à 10 mmol.l⁻¹ d'acide phénylphosphonique (PPO) dans l'isopropanol.

Les taux de couverture ainsi obtenus en fonction du temps d'immersion dans la solution de PPO sont précisés dans le tableau 2 ci-après :

**TABLEAU 2**

| Particules | Temps d'immersion | Taux de couverture |
|---|---|---|
| P1 | 5 min | 41 % |
| P2 | 10 min | 50% |
| P3 | 60 min | 48 % |
| P4 | 24 heures | 61 % |
| P5 | 96 heures | 79 % |
| P0 | - | 0% |

Les particules P0 sont des particules de LiV₃O₈ n'ayant pas été immergées dans la solution de PPO, c'est-à-dire ne comportant aucun groupement PPO en surface.

On a utilisé des particules de LiV₃O₈ préparées selon le mode opératoire de l'exemple 1 et présentant des taux de couverture allant de 41 % à 79 %, comme matière active pour la fabrication de différentes électrodes.

Ces différentes particules ont ensuite été utilisées pour fabriquer des électrodes selon le procédé décrit ci-dessus dans cet exemple (Electrodes E1, E2, E3, E4, E5 et E0 respectivement) dont les propriétés électrochimiques ont ensuite été vérifiées à l'aide d'un galvanostat potentiostat de type Mac-Pile comme décrit précédemment.

La figure 6 annexée présente les courbes de capacité massique en fonction du nombre de cycles et représentent la quantité de charge stockée par gramme d'oxyde complexe.

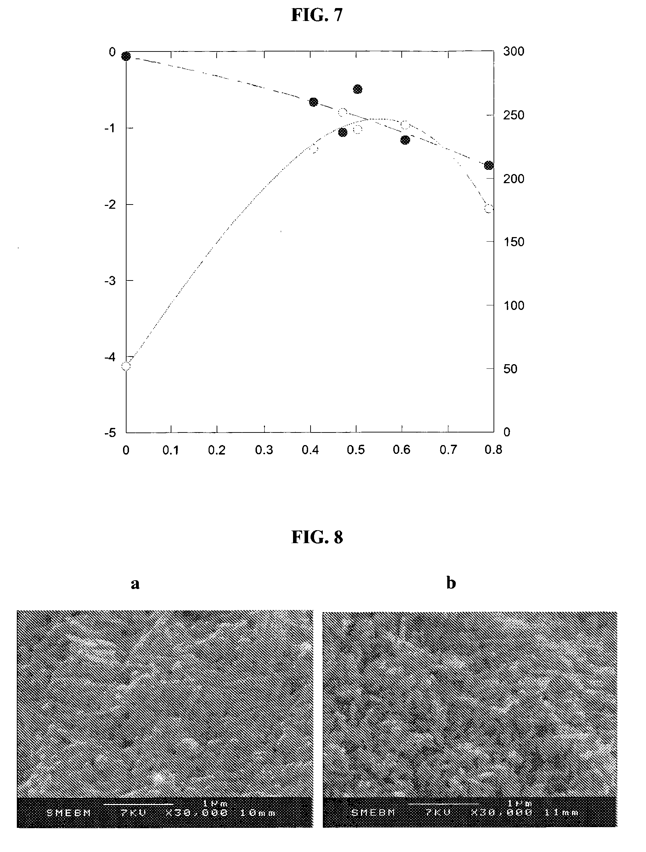

La figure 7 annexée représente la cyclabilité des électrodes (exprimée en % de perte / cycle ; axe vertical de gauche, courbe avec les ronds vides) en fonction du taux de couverture (%), ainsi que la capacité des électrodes (exprimée en mAh/g ; axe vertical de droite, courbe avec les ronds pleins) en fonction également du taux de couverture (%).

Ces résultats indiquent qu'un taux de couverture compris entre environ 40 % et 60 % est optimal en considérant les aspects cyclabilité et capacité.

### Analyse par microscopie électronique à balayage (MEB) de l'électrode

Les images de la figure 8 montrent des clichés pris par MEB à l'aide d'un microscope GEOL 6400 avec un grossissement de 30000 de la surface de l'électrode à base des particules de LiV₃O₈ non modifié, après 50 cycles (cliché de gauche), et de la surface d'une électrode à base de particules de LiV₃O₈-PPO, après 70 cycles (cliché de droite).

Ces images montrent que l'électrode d'oxyde non modifié présente une couche en surface après 50 cycles, ladite couche résultant de la décomposition de l'électrolyte. Au contraire, l'électrode à base des particules de LiV₃O₈-PPO conforme à l'invention ne présente pas de couche en surface, même après 70 cycles. Ces résultats confirment que le greffage de PPO à la surface des particules de LiV₃O₈ empêche la dégradation de l'électrolyte.

## Revendications

1. Electrode comprenant un support conducteur électrique portant un matériau d'électrode, **caractérisée en ce que** le matériau d'électrode comprend une matière active constituée par des particules d'un oxyde complexe qui portent à leur surface des groupes organiques phosphorés fixés par liaison covalente, et **en ce que** le taux de couverture des groupes organiques phosphorés à la surface des particules de l'oxyde complexe varie de 40 à 60 %.

2. Electrode selon la revendication 1, **caractérisée en ce que** le taux de couverture des groupes organiques phosphorés à la surface des particules de l'oxyde complexe est de l'ordre de 50 %.

3. Electrode selon la revendication 1 ou 2, **caractérisée en ce que** les groupes organiques phosphorés sont fixés par greffage tridentate, par greffage bidentate ou par greffage monodentate.

4. Electrode selon l'une quelconque des revendications précédentes, **caractérisée en ce que** les groupes organiques phosphorés sont choisis parmi RP, (RO)P, RP(OR), R₂P, (RO)₂P, RP(OR)₂, (RO)₃P, R₂P(OR) dans lesquels les groupements R sont des groupements identiques ou différents choisis parmi l'hydrogène, les groupes alkyle ayant de 1 à 10 atomes de carbone et les groupes phényle, lesdits groupes portant éventuellement au moins un substituant ayant une fonction capable de réagir par substitution, addition, condensation ou polymérisation.

5. Electrode selon l'une quelconque des revendications précédentes, **caractérisée en ce que** les particules de l'oxyde complexe sont choisies parmi les particules de LiV₃O₈, LiMn₂O₄, LiCoO₂, LiMPO₄ avec M = Fe, Mn ou Co, Li₂MSiO₄ avec M = Fe, Mn ou Co, LiFeBO₃, Li₄Ti₅O₁₂, LiMn₂O₄, LiNi_{1-y-z}Mn_{y}Co_{z}AlₜO₂ (0 < y < 1 ; 0 < z < 1 ; 0 < t < 1), V₂O₅, MnO₂, LiFePO₄F, Li₃V₂(PO₄)₃, et LiVPO₄F.

6. Electrode selon l'une quelconque des revendications précédentes, **caractérisée en ce que** la matière active comprend en outre au moins un constituant choisi parmi un matériau conférant des propriétés de conduction ionique, un matériau conférant des propriétés de conduction électronique, et éventuellement un matériau conférant des propriétés mécaniques.

7. Electrode selon la revendication 6, **caractérisée en ce que** le matériau conférant des propriétés de conduction ionique est un sel de lithium.

8. Electrode selon la revendication 6, **caractérisée en ce que** le matériau conférant des propriétés de conduction électronique est du carbone.

9. Electrode selon la revendication 6, **caractérisée en ce que** le matériau conférant des propriétés mécaniques est un liant organique.

10. Electrode selon la revendication 6, **caractérisée en ce que** le matériau d'électrode comprend de 50 à 90 % en poids de particules de l'oxyde complexe modifié, de 10 à 30 % en poids du matériau conférant des propriétés de conduction électronique, et éventuellement au plus 10 % en poids du matériau conférant des propriétés mécaniques.

11. Electrode selon la revendication 9, **caractérisée en ce que** le matériau d'électrode comprend 70 % en poids de particules de l'oxyde complexe modifié et 30 % en poids du matériau conférant des propriétés de conduction électronique.

12. Electrode selon l'une quelconque des revendications précédentes, **caractérisée en ce que** le support collecteur est un collecteur de courant en aluminium pour une électrode positive, et en cuivre pour une électrode négative.

13. Procédé de fabrication d'une électrode selon l'une quelconque des revendications 1 à 12, **caractérisé en ce qu'**il comprend les étapes consistant à préparer un oxyde complexe modifié par réaction d'un oxyde complexe avec un réactif phosphoré portant un groupe P=O, et à déposer l'oxyde complexe modifié obtenu sur un support conducteur électrique.

14. Procédé selon la revendication 13, **caractérisé en ce que** le réactif phosphoré répond à la formule R₃₋ₙ(RO)ₙP=O dans laquelle n est un nombre entier allant de 1 à 3, les groupements R étant des groupements identiques ou différents choisis parmi l'hydrogène, les groupes alkyle ayant de 1 à 10 atomes de carbone et les groupes phényle, lesdits groupes portant éventuellement au moins un substituant ayant une fonction capable de réagir par substitution, addition, condensation ou polymérisation.

15. Procédé selon l'une quelconque des revendications 13 à 14, **caractérisé en ce que** le réactif phosphoré est l'acide phénylphosphonique (PPO).

16. Procédé selon l'une quelconque des revendications 13 à 15, **caractérisé en ce que** l'étape de préparation de l'oxyde complexe modifié est effectuée pendant une durée de 24 heures.

17. Batterie au lithium comprenant une électrode positive et une électrode négative séparées par un électrolyte comprenant un sel de lithium en solution dans un solvant, dont le fonctionnement est assuré par la circulation réversible d'ions lithium entre lesdites électrodes, **caractérisée en ce qu'**au moins l'une des électrodes est une électrode selon l'une quelconques des revendications 1 à 12.

18. Batterie selon la revendication 17, **caractérisée en ce que** l'électrode définie aux revendications 1 à 12 est l'électrode positive.

19. Batterie selon la revendication 18, **caractérisée en ce que** l'électrode négative est constituée par du lithium métallique, ou par un alliage de lithium choisi parmi les alliages β LiAl, γ-LiAl, Li Pb, Li-Cd-Pb, Li-Sn, Li-Sn-Cd, et Li-Sn.

20. Batterie selon la revendication 18, **caractérisée en ce que** l'électrode négative comprend un liant organique et un matériau capable d'insérer de manière réversible des ions lithium à bas potentiel rédox.

## Patentansprüche

1. Elektrode mit einem elektrisch leitenden Untergrund, der ein Elektrodenmaterial trägt, **dadurch gekennzeichnet, dass** das Elektrodenmaterial ein aktives Material umfasst, das von Partikeln eines Komplexoxids gebildet ist, die auf ihrer Oberfläche organische phosphorhaltige Gruppen tragen, die durch kovalente Bindung fixiert sind, und dass der Abdeckungsgrad der organischen phosphorhaltigen Gruppen auf der Oberfläche der Partikel des Komplexoxids von 40 bis 60 % schwankt.

2. Elektrode nach Anspruch 1, **dadurch gekennzeichnet, dass** der Abdeckungsgrad der organischen phosphorhaltigen Gruppen auf der Oberfläche der Partikel des Komplexoxids in der Größenordnung von 50 % ist.

3. Elektrode nach Anspruch 1 oder 2, **dadurch gekennzeichnet, dass** die organischen phosphorhaltigen Gruppen durch dreizähnige Pfropfung, durch zweizähnige Pfropfung oder durch einzähnige Pfropfung fixiert sind.

4. Elektrode nach einem der vorangehenden Ansprüche, **dadurch gekennzeichnet, dass** die organischen phosphorhaltigen Gruppen aus RP, (RO)P, RP(OR), R₂P, (RO)₂P, RP(OR)₂, (RO)₃P, R₂P(OR) ausgewählt sind, wobei die R-Gruppen identische oder unterschiedliche Gruppen sind, die aus dem Wasserstoff, den Alkylgruppen mit 1 bis 10 Kohlenstoffatomen und den Phenylgruppen ausgewählt sind, wobei die Gruppen, die eventuell einen Substituenten tragen, eine Funktion haben, die imstande ist, durch Substitution, Addition, Kondensation oder Polymerisation zu reagieren.

5. Elektrode nach einem der vorangehenden Ansprüche, **dadurch gekennzeichnet, dass** die Partikel des Komplexoxids aus den Partikeln von LiV₃O₈, LiMn₂O₄, LiCoO₂, LiMPO₄ mit M = Fe, Mn oder Co, Li₂MSiO₄ mit M = Fe, Mn oder Co, LiFeBO₃, Li₄Ti₅O₁₂, LiMn₂O₄, LiNi_{1-y-z}Mn_{y}Co_{z}AlₜO₂ (0 < y < 1; 0 < z < 1; 0 < t < 1), V₂O₅, MnO₂, LiFePO₄F, Li₃V₂(PO₄)₃ und LiVPO₄F ausgewählt sind.

6. Elektrode nach einem der vorangehenden Ansprüche, **dadurch gekennzeichnet, dass** das aktive Material ferner mindestens einen Bestandteil umfasst, der aus einem Material ausgewählt ist, das Ionenleiteigenschaften verleiht, einem Material, das elektronische Leiteigenschaften verleiht und eventuell einem Material, das mechanische Eigenschaften verleiht.

7. Elektrode nach Anspruch 6, **dadurch gekennzeichnet, dass** das Material, das Ionenleiteigenschaften verleiht, ein Lithiumsalz ist.

8. Elektrode nach Anspruch 6, **dadurch gekennzeichnet, dass** das Material, das elektronische Leiteigenschaften verleiht, Kohlenstoff ist.

9. Elektrode nach Anspruch 6, **dadurch gekennzeichnet, dass** das Material, das mechanische Eigenschaften verleiht, ein organisches Bindemittel ist.

10. Elektrode nach Anspruch 6, **dadurch gekennzeichnet, dass** das Elektrodenmaterial 50 bis 90 Gew.-% Partikel des modifizierten Komplexoxids, 10 bis 30 Gew.-% Material, das elektronische Leiteigenschaften verleiht und eventuell höchsten 10 Gew.-% Material, das mechanische Eigenschaften verleiht, umfasst.

11. Elektrode nach Anspruch 9, **dadurch gekennzeichnet, dass** das Elektrodenmaterial 70 Gew.-% Partikel des modifizierten Komplexoxids und 30 Gew.-% Material, das elektronische Leiteigenschaften verleiht, umfasst.

12. Elektrode nach einem der vorangehenden Ansprüche, **dadurch gekennzeichnet, dass** die Kollektorunterlage ein Stromkollektor aus Aluminium für eine positive Elektrode und aus Kupfer für eine negative Elektrode ist.

13. Herstellungsverfahren einer Elektrode nach einem der Ansprüche 1 bis 12, **dadurch gekennzeichnet, dass** es die Schritte umfasst, die darin bestehen, ein modifiziertes Komplexoxid durch Reaktion eines Komplexoxids mit einem phosphorhaltigen Reagenz, das eine P=O-Gruppe trägt, vorzubereiten und das hergestellte modifizierte Komplexoxid auf einer elektrisch leitenden Unterlage abzulagern.

14. Verfahren nach Anspruch 13, **dadurch gekennzeichnet, dass** das phosphorhaltige Reagenz der Formel R₃₋ₙ(RO)ₙP=O entspricht, wobei n eine Ganzzahl von 1 bis 3 ist, wobei die R-Gruppen identische oder unterschiedliche Gruppen sind, die aus dem Wasserstoff, den Alkylgruppen mit 1 bis 10 Kohlenstoffatomen und den Phenylgruppen ausgewählt sind, wobei die Gruppen, die eventuell einen Substituenten tragen, eine Funktion haben, die imstande ist, durch Substitution, Addition, Kondensation oder Polymerisation zu reagieren.

15. Verfahren nach einem der Ansprüche 13 bis 14, **dadurch gekennzeichnet, dass** das phosphorhaltige Reagenz die Phenylphosphonsäure (PPO) ist.

16. Verfahren nach einem der Ansprüche 13 bis 15, **dadurch gekennzeichnet, dass** der Schritt der Vorbereitung des modifizierten Komplexoxids während einer Dauer von 24 Stunden durchgeführt wird.

17. Lithiumbatterie, die eine positive Elektrode und eine negative Elektrode umfasst, die durch ein Elektrolyt getrennt sind, das ein in einem Lösungsmittel gelöstes Lithiumsalz umfasst, deren Funktion durch die reversible Zirkulation von Lithiumionen zwischen den Elektroden sichergestellt ist, **dadurch gekennzeichnet, dass** mindestens eine der Elektroden eine Elektrode nach einem der Ansprüche 1 bis 12 ist.

18. Batterie nach Anspruch 17, **dadurch gekennzeichnet, dass** die in den Ansprüchen 1 bis 12 definierte Elektrode die positive Elektrode ist.

19. Batterie nach Anspruch 18, **dadurch gekennzeichnet, dass** die negative Elektrode aus metallischem Lithium besteht oder einer Lithiumlegierung, die aus den Legierungen β LiAl, γ-LiAl, Li-Pb, Li-Cd-Pb, Li-Sn, Li-Sn-Cd und Li-Sn ausgewählt ist.

20. Batterie nach Anspruch 18, **dadurch gekennzeichnet, dass** die negative Elektrode ein organisches Bindemittel und ein Material umfasst, das imstande ist, Lithiumionen mit niedrigen Redoxpotential reversibel aufzunehmen.

## Claims

1. Electrode comprising an electrically conducting support carrying an electrode material, **characterized in that** the electrode material comprises an active substance constituted of particles of a complex oxide which bear on their surface organophosphorus-containing groups fixed by covalent bonding, and **in that** the degree of coverage of the organophosphorus-containing groups on the surface of the particles of complex oxide varies from 40 to 60%.

2. The electrode according to claim 1, **characterized in that** the degree of coverage of the organophosphorus-containing groups on the surface of the particles of complex oxide is of the order of 50%.

3. The electrode according to claim 1 or 2, **characterized in that** the organophosphorus-containing groups are fixed by tridentate grafting, by bidentate grafting or by monodentate grafting.

4. The electrode according to any one of the preceding claims, **characterized in that** the organophosphorus-containing groups are selected from RP, (RO)P, RP(OR), R₂P, (RO)₂P, RP(OR)₂, (RO)₃P, R₂P(OR) in which the groups R are identical or different groups selected from hydrogen, alkyl groups having from 1 to 10 carbon atoms and phenyl groups, said groups optionally bearing at least one substituent having a function capable of reacting by substitution, addition, condensation or polymerization.

5. The electrode according to any one of the preceding claims, **characterized in that** the particles of complex oxide are selected from particles of LiV₃O₈, LiMn₂O₄, LiCoO₂, LiMPO₄ with M = Fe, Mn or Co, Li₂MSiO₄ with M = Fe, Mn or Co, LiFeBO₃, Li₄Ti₅O₁₂, LiMn₂O₄, LiNi_{1-y-z}Mn_{y}Co_{z}AlₜO₂ (0 < y < 1; 0 < z < 1; 0 < t < 1), V₂O₅, MnO₂, LiFePO₄F, Li₃V₂(PO₄)₃, and LiVPO₄F.

6. The electrode according to any one of the preceding claims, **characterized in that** the active substance further comprises at least one constituent selected from a material conferring properties of ionic conduction, a material conferring properties of electron conduction, and optionally a material conferring mechanical properties.

7. The electrode according to claim 6, **characterized in that** the material conferring properties of ionic conduction is a lithium salt.

8. The electrode according to claim 6, **characterized in that** the material conferring properties of electron conduction is carbon.

9. The electrode according to claim 6, **characterized in that** the material conferring mechanical properties is an organic binder.

10. The electrode according to claim 6, **characterized in that** the electrode material comprises from 50 to 90 wt.% of particles of modified complex oxide, from 10 to 30 wt.% of material conferring properties of electron conduction, and optionally at most 10 wt.% of material conferring mechanical properties.

11. The electrode according to claim 9, **characterized in that** the electrode material comprises 70 wt.% of particles of modified complex oxide and 30 wt.% of material conferring properties of electron conduction.

12. The electrode according to any one of the preceding claims, **characterized in that** the collecting support is a current collector made of aluminum for a positive electrode, and of copper for a negative electrode.

13. Method of manufacture of an electrode as claimed in any one of claims 1 to 12, **characterized in that** it comprises stages consisting of preparing a modified complex oxide by reaction of a complex oxide with a phosphorus-containing reagent carrying a group P=O, and of depositing the modified complex oxide obtained on an electrically conducting support.

14. The method according to claim 13, **characterized in that** the phosphorus-containing reagent corresponds to the formula R₃₋ₙ(RO)ₙP=O in which n is an integer in the range from 1 to 3, the groups R being groups, which may be identical or different, selected from hydrogen, alkyl groups having from 1 to 10 carbon atoms and phenyl groups, said groups optionally bearing at least one substituent having a function capable of reacting by substitution, addition, condensation or polymerization.

15. The method according to any one of claims 13 to 14, **characterized in that** the phosphorus-containing reagent is phenylphosphonic acid (PPO).

16. The method according to any one of claims 13 to 15, **characterized in that** the stage of preparation of the modified complex oxide is carried out for a time of 24 hours.

17. Lithium battery comprising a positive electrode and a negative electrode separated by an electrolyte comprising a lithium salt in solution in a solvent, the functioning of which is ensured by reversible circulation of lithium ions between said electrodes, **characterized in that** at least one of the electrodes is an electrode as claimed in any one of claims 1 to 12.

18. The battery according to claim 17, **characterized in that** the electrode defined in claims 1 to 12 is the positive electrode.

19. The battery according to claim 18, **characterized in that** the negative electrode is constituted of metallic lithium, or of a lithium alloy selected from the alloys β-LiAl, γ-LiAl, Li-Pb, Li-Cd-Pb, Li-Sn, Li-Sn-Cd, and Li-Sn.

20. The battery according to claim 18, **characterized in that** the negative electrode comprises an organic binder and a material capable of reversibly introducing lithium ions at low redox potential.
